# EUROPÄISCHE PATENTANMELDUNG

(11) **EP 4 762 994 A1**
(43) Veröffentlichungstag der Anmeldung: **24.06.2026**
(21) Anmeldenummer: 25225093.1
(22) Anmeldetag: 18.12.2025
(51) Int. Cl.: A47B 88/95, F16B 12/20

(54) **BEFESTIGUNGSVORRICHTUNG FÜR EIN MÖBELTEIL UND MÖBELTEIL**

(30) Priorität: 20.12.2024 DE 102024139334
(71) Anmelder: Grass GmbH, 6973 Höchst (AT)
(72) Erfinder: Hlavacek, Thomas, 6900 Bregenz (AT)
(74) Vertreter: RavensPAT Patentanwälte Partnerschaft mbB

(57) **Zusammenfassung**

Bei einer Befestigungsvorrichtung für eine bewegbares Möbelteil (12), insbesondere Schublade (12), mit wenigstens einer eine Komponenten-Längsachse (40) aufweisende Basiskomponente (22) und einer Wandbefestigungseinrichtung (24) an einem Streben-Ende (23a) der Basiskomponente (22) zur Befestigung an einem Wandelement des Möbelteils (12), wobei die Wandbefestigungseinrichtung (24) einen am Komponenten-Ende (23a) der Basiskomponente (22) befestigbaren oder befestigten Halter (26) aufweist, an dem ein relativ zum Halter (26) beweglich gelagertes Stellglied (27) angeordnet ist, dem ein Verriegelungselement (28) zur lösbaren Verriegelung der Basiskomponente (22) am Wandelement und ein ebenfalls relativ zum Halter (26) beweglich gelagertes Betätigungselement (29) derart zugeordnet sind, dass durch Betätigung des Betätigungselementes (29) eine Stellbewegung auf das Stellglied einleitbar ist, das dadurch, einen Stellhub durchführend zwischen einer Ausgangsstellung (30) und einer Funktionsstellung (31) bewegbar ist, um das Verriegelungselement zwischen einer Verriegelungsstellung (32) und einer Freigabestellung (33) zu verstellen, weist das Betätigungselement (29) eine am Betätigungselement (29) ausgebildete mit dem Stellglied (27) in Eingriff stehende oder in Eingriff bringbare Führungsbahn (50) auf, die mit einer am Stellglied (27) ausgebildeten Wirkfläche (49) derart zusammenwirkt, dass Führungsbahn (50) und Wirkfläche (49) aneinander abgleiten und dadurch die Betätigungsbewegung des Betätigungselementes (29) in die Stellbewegung des Stellglieds (27) überführbar ist, die eine lineare, parallel zu Komponenten-Längsachse (40) ausgerichtete Stellbewegung ist.

## Beschreibung

Die Erfindung betrifft eine Befestigungsvorrichtung zur Befestigung von Komponenten eines vorzugsweise bewegbaren Möbelteils, insbesondere Schublade, aneinander, wobei das Möbelteil wenigstens eine eine Komponenten-Längsachse aufweisende Basiskomponente und die Befestigungsvorrichtung eine Wandbefestigungseinrichtung an einem Komponenten-Ende der Basiskomponente zur Befestigung an einem Wandelement des Möbelteils aufweist, wobei die Wandbefestigungseinrichtung einen am Komponenten-Ende der Basiskomponente befestigbaren Halter aufweist, an dem ein relativ zum Halter beweglich gelagertes Stellglied angeordnet ist, dem ein Verriegelungselement zur lösbaren Verriegelung der Basiskomponente am Wandelement und ein ebenfalls relativ zum Halter beweglich gelagertes Betätigungselement derart zugeordnet sind, dass durch Betätigung des Betätigungselementes eine Stellbewegung auf das Stellglied einleitbar ist, das dadurch, einen Stellhub durchführend, zwischen einer Ausgangsstellung und einer Funktionsstellung bewegbar ist, um das Verriegelungselement zwischen einer Verriegelungsstellung und einer Freigabestellung zu verstellen.

Befestigungsvorrichtungen für Schubladen sind bereits seit langem bekannt. Sie werden beispielsweise zur Befestigung einer Reling an einer Frontblende einer Schublade verwendet. Solche Relinge sind in der Regel in Schubladen verbaut, die gegenüber "Standard-Schubladen" eine größere Höhe haben. Die Relinge sind dann insbesondere oberhalb der sich in Tiefenrichtung der Schublade erstreckenden Seitenteile angeordnet. Zwischen den Oberkanten der Seitenteile, beispielsweise Seitenwände oder Seitenzargen, und den Unterkanten der Relinge befindet sich also eine Aussparung. Durch das Vorsehen einer Reling wird also vermieden, dass die Seitenteile eine relativ große Höhe einnehmen müssen, um den Inhalt der Schublade zuverlässig zu sichern, wodurch Standard-Seitenteile verwendet werden können, was natürlich zu einem erheblichen Kostenvorteil führt. Außerdem ist natürlich das Gewicht solcher mit Relingen ausgestatteten Schubladen deutlich geringer als bei solchen mit vollflächigen Seitenteilen. Ferner ist es natürlich bekannt, Befestigungsvorrichtungen zur Befestigung von Zargen oder Seitenwänden an Frontblenden oder Rückwänden oder von Böden an Frontblenden zu verwenden, wobei die hier genannte Aufzählung nicht vollständig ist.

Eine Reling ist beispielsweise aus der WO 2012/092631 A1 bekannt. Bei der dort offenbarten Reling kommt eine Blendenbefestigungsvorrichtung zum Einsatz, die zur Befestigung der Reling an einer Frontblende dient. Die Blendenbefestigungsvorrichtung weist eine Hülse auf, die endseits in die als Hohlprofil ausgebildete Basiskomponente eingesetzt ist. In der Hülse ist ein Führungsteil aufgenommen, an dem ein Gelenkhebel schwenkbar gelagert ist. Der Gelenkhebel ist mit einem Montageteil gelenkig verbunden, wobei das Montageteil bei der Verschwenkung des Gelenkhebels aufgespreizt wird, womit eine feste Verbindung mit der zugeordneten Frontblende hergestellt wird.

Aufgabe der Erfindung ist, es eine Befestigungsvorrichtung der eingangs erwähnten Art zu schaffen, die kostengünstig herstellbar ist und mit der sich Komponenten eines Möbelteils einfach aneinander montieren lassen.

Diese Aufgabe wird durch eine Befestigungsvorrichtung mit den Merkmalen des unabhängigen Anspruchs 1 gelöst. Weiterbildungen der Erfindung sind in den Unteransprüchen dargestellt.

Die erfindungsgemäße Befestigungsvorrichtung zeichnet sich dadurch aus, dass das Betätigungselement eine am Betätigungselement ausgebildete mit dem Stellglied in Eingriff stehende oder in Eingriff bringbare Führungsbahn aufweist, die mit einer am Stellglied ausgebildeten Wirkfläche derart zusammenwirkt, dass Führungsbahn und Wirkfläche aneinander abgleiten und dadurch die Betätigungsbewegung des Betätigungselementes in die Stellbewegung des Stellglied überführen, die eine lineare, parallel zu Komponenten-Längsachse ausgerichtete Stellbewegung ist.

Im Gegensatz zum vorgenannten Stand der Technik ist die Stellbewegung des Stellglieds also eine Linearbewegung parallel zur Komponenten-Längsachse, wodurch eine präzise Kraftübertragung auf das Verriegelungselement möglich ist. Das Stellglied ist ferner durch eine Betätigung des Betätigungselements in reverser Richtung wieder lösbar, wodurch die Verbindung mit dem Wandelement des bewegbaren Möbelteils in einfacher Weise wieder lösbar ist.

Bei einer Weiterbildung der Erfindung weist der Halter Führungsmittel zur Führung des Betätigungselements auf, die derart ausgebildet sind, dass die Betätigungsbewegung des Betätigungselements eine Linearbewegung ist. Somit kann also eine lineare Betätigungsbewegung über die Führungsbahn und die Wirkungsfläche in eine lineare Stellbewegung überführt werden.

Besonders bevorzugt weisen die Führungsmittel einen eine Kanal-Längsachse aufweisenden Führungskanal zur Führung des Betätigungselements auf. Der Führungskanal kann sich also im Halter befinden. Zweckmäßigerweise ist die Kanal-Längsachse des Führungskanals senkrecht beziehungsweise orthogonal zur Komponenten-Längsachse ausgerichtet.

Es ist möglich, dass der Führungskanal einen rechteckigen, insbesondere quadratischen Kanal-Querschnitt aufweist. Zweckmäßigerweise weist das Betätigungselement ebenfalls einen rechteckigen Querschnitt auf. Das Betätigungselement ist als eine Art Knopfkörper ausgebildet. Das Betätigungselement könnte daher auch als Auslöseknopf bezeichnet werden.

In besonders bevorzugter Weise ist das Betätigungselement zwischen einer aus dem Führungskanal herausgefahrenen ersten Position und einer in den Führungskanal eingefahrenen zweiten Position linear beweglich geführt. Zweckmäßigerweise befindet sich das Stellglied in der ersten Position des Betätigungselements in seiner Ausgangsstellung und wird bei der Überführung des Betätigungselementes in die zweite Position mittels der Führungsbahn in die Funktionsstellung verlagert. Theoretisch wäre es jedoch auch möglich, dass sich das Stellglied in der zweiten Position des Betätigungselements in seiner Ausgangsstellung befindet.

Bei einer Weiterbildung der Erfindung ist die Betätigungsbewegung des Betätigungselements durch manuell oder maschinell erzeugbares Drücken initiierbar. Alternativ könnte die Betätigungsbewegung auch durch ein Ziehen des Betätigungselementes auslösbar sein.

In besonders bevorzugter Weise weist die Führungsbahn zwei aneinander angrenzende unterschiedliche Steigungen lineare Bahnabschnitte auf, von denen ein erster Bahnabschnitt gegenüber der Kanal-Längsachse geneigt und ein zweiter Bahnabschnitt parallel zur Kanal-Längsachse ausgerichtet ist. Es sind alternativ auch andere Bahnverläufe denkbar, beispielsweise ein durchgehend geneigter Bahnabschnitt.

Zweckmäßigerweise ist die Neigung des ersten Bahnabschnitts in Richtung der Komponenten-Längsachse ausgehend von dessen nicht an den zweiten Bahnabschnitt angrenzenden freien Ende in Richtung des zweiten Bahnabschnitts hin zum ersten Streben-Ende der Basiskomponente ausgerichtet.

Bei einer Weiterbildung der Erfindung steht der geneigte erste Bahnabschnitt in der ersten Position des Betätigungselements in Eingriff mit der am Stellglied ausgebildeten Wirkfläche.

Bei einer Weiterbildung der Erfindung ist das Stellglied in einem parallel zur Komponenten-Längsachse ausgerichteten Stellglied-Führungskanal linear beweglich geführt. Zweckmäßigerweise ist das Stellglied als insbesondere kreiszylindrischer Stellbolzen ausgebildet. Das Stellglied könnte auch als Spreizwelle bezeichnet werden. Das Stellglied könnte auch abweichend von der kreiszylindrischen Ausgestaltung andere Formen aufweisen, beispielsweise im Querschnitt oval oder rechteckförmig ausgebildet sein.

Bei einer Weiterbildung der Erfindung besitzt der Stellbolzen eine als Wirkfläche ausgebildete Schrägfläche, die mit der Führungsbahn zusammenwirkt. Besonders bevorzugt ist die Schrägfläche Bestandteil einer im Stellbolzen ausgebildeten Ringnut, insbesondere eine der Wandungen der Ringnut.

Bei einer Weiterbildung der Erfindung ist das Verriegelungselement als Spreizelement, insbesondere Dübel, ausgebildet, das durch die Stellbewegung des Stellglieds, insbesondere Stellbolzen, aufspreizbar ist und somit seine Verriegelungsstellung einnehmen kann.

Es ist möglich, dass das Spreizelement eine Aufnahmeöffnung für das Stellglied, insbesondere Stellbolzen, aufweist, die in Verlängerung des Stellglied-Führungskanals angeordnet ist. Bei einer Weiterbildung der Erfindung ist das Spreizelement ein Bestandteil des Halters, insbesondere einstückig mit diesem verbunden.

Der Halter kann beispielsweise ein Kunststoffspritzgießteil sein, wobei das Spreizelement bei der Herstellung gleich mit angeformt wird.

Es ist möglich, dass die Befestigungsvorrichtung ein Verkleidungselement aufweist, das bei montierter Befestigungsvorrichtung den Bereich zwischen dem Wandelement und dem diesem zugeordneten Ende der Basiskomponente verkleidet, beispielsweise den Halter abdeckt.

Zweckmäßigerweise ist das Verkleidungselement hülsenförmig ausgebildet und ist zweckmäßigerweise verschiebbar auf dem Halter gelagert.

Zweckmäßigerweise ist die Basiskomponente als Hohlprofil ausgestaltet, wobei der Halter in eines der offenen Enden der Basiskomponente einsteckbar ist. Hierzu kann der Halter einen Einschiebeanschlag aufweisen, der die Einschiebeposition vorgibt.

Die Erfindung umfasst ferner ein insbesondere bewegbares Möbelteil, beispielsweise in Form einer Schublade, wobei das Möbelteil mehreren Komponenten aufweist, von denen wenigstens eine eine Basiskomponente und wenigsten eine ein Wandelement ist, wobei das Möbelteil eine Befestigungsvorrichtung nach einem der vorhergehenden Ansprüche aufweist.

Derartige bewegbare Möbelteile, insbesondere Schubladen, sind in der Regel mittels einer mehrere Führungsschienen aufweisenden Führungseinrichtung linear verschieblich in einem Möbelkorpus eines Möbels aufgenommen.

Vorzugsweise ist die Basiskomponente ausgewählt aus der Gruppe bestehend aus: Reling, Seitenwand, Zarge und Boden.

Zweckmäßigerweise ist das Wandelement ausgewählt aus der Gruppe bestehend aus: Frontblende und Rückwand.

Ferner umfasst die Erfindung ein Möbel, mit einem Möbelkorpus, in dem wenigstens ein Möbelfach ausgebildet ist, in dem ein zugeordnetes Möbelteil insbesondere mittels einer Führungseinrichtung beweglich aufgenommen, wobei das Möbelteil nach einem der Ansprüche 16 bis 18 ausgebildet ist.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung eines bewegbaren Möbelteils in Form einer Schublade, bei der die erfindungsgemäße Befestigungsvorrichtung gemäß einem ersten Ausführungsbeispiel verbaut ist,
- Figur 2: eine perspektivische Darstellung der Schublade von Figur 1, wobei die Befestigungsvorrichtung in Explosionsdarstellung gezeigt ist,
- Figur 3: eine Seitenansicht auf die Befestigungsvorrichtung, mit dem Betätigungselement in der ersten Position,
- Figur 4: einen Längsschnitt durch die Befestigungsvorrichtung von Figur 3 entlang der Linie IV-IV in Figur 3,
- Figur 5: eine Seitenansicht der Befestigungsvorrichtung, mit dem Betätigungselement in der zweiten Position,
- Figur 6: einen Längsschnitt durch die Befestigungsvorrichtung von Figur 5 entlang der Linie V-V aus Figur 5,
- Figur 7: eine Explosionsdarstellung der erfindungsgemäßen Befestigungsvorrichtung,
- Figur 8: eine Seitenansicht der einzelnen Bauelemente der erfindungsgemäßen Befestigungsvorrichtung,

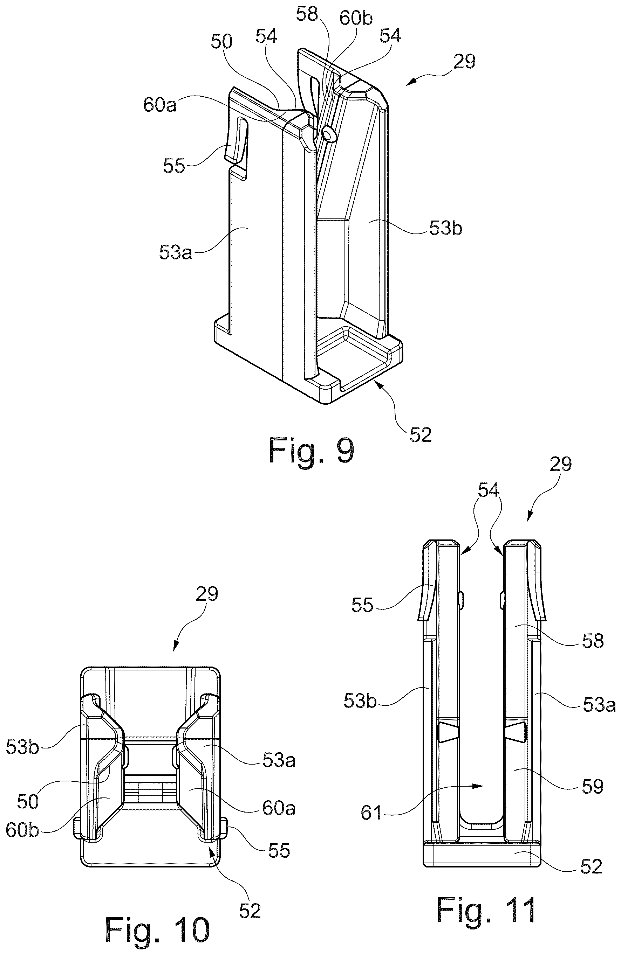

- Figur 9: eine perspektivische Darstellung eines Betätigungselementes der erfindungsgemäßen Befestigungsvorrichtung,
- Fig.10: eine Draufsicht auf das Betätigungselement von Fig. 9,
- Fig.11: eine Vorderansicht auf das Betätigungselement von Fig.9,
- Fig. 12: eine perspektivische Darstellung eines bewegbaren Möbelteils in Form einer Schublade, bei der die erfindungsgemäße Befestigungsvorrichtung gemäß einem zweiten Ausführungsbeispiel verbaut ist und
- Fig. 13: eine perspektivische Darstellung eines bewegbaren Möbelteils in Form einer Schublade, bei der die erfindungsgemäße Befestigungsvorrichtung gemäß einem dritten Ausführungsbeispiel verbaut ist.

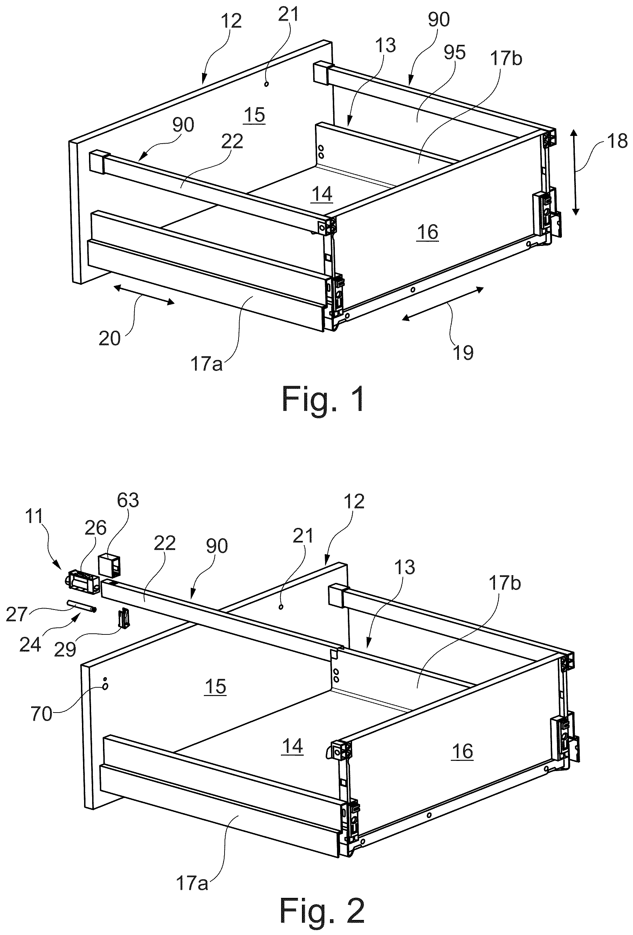

Die Figuren 1 bis 8 zeigen ein erstes Ausführungsbeispiel der erfindungsgemäßen Befestigungsvorrichtung 11, die gemäß diesem Ausführungsbeispiel zur Verbindung einer Reling mit einer Frontblende eines bewegbaren Möbelteils in Form einer Schublade 12 dient.

Wie insbesondere in den Figuren 1 und 2 gezeigt, ist die Schublade 12 beispielhaft eine solche, mit relativ großer Höhe, wie sie beispielsweise als untere Schublade einer Einbauküche verwendet wird. Der Stauraum 13 ist in der Regel deutlich größer als bei normalen beziehungsweise Standard-Schubladen.

Jedenfalls ist die Schublade in einem Auszugsfach eines Möbelkorpus (nicht dargestellt) eines Möbels beweglich geführt aufgenommen.

Die Schublade besitzt ein Bodenelement 14, ein Frontelement in Form einer Frontblende 15, eine Rückwand 16 und zwei Seitenteile 17a, 17b, die im gezeigten Beispielsfall als Seitenzargen ausgebildet sind.

Wie insbesondere in Figur 1 gezeigt, stehen die Rückwand 16 und die Seitenteile 17a, 17b senkrecht vom Bodenelement 14 ab und verlaufen in einer Höhenrichtung 18. Die Rückwand 16 liegt der Frontblende 15 gegenüber. Frontblende 15 und Rückwand 16 verlaufen in einer Breitenrichtung 19 der Schublade 12. Die beiden Seitenteile 17a, 17b bilden zusammen mit der Befestigungsvorrichtung 11 den linken und rechten Abschluss der Schublade und verlaufen in Tiefenrichtung 20, sie sind also im Wesentlichen senkrecht zur Rückwand 16 und zur Frontblende 15 ausgerichtet.

Wie insbesondere in Figur 1 gezeigt, sind zwei Relinge 90 vorgesehen, von denen eine Reling dem einen Seitenteil 17a und die andere Reling 90 dem anderen Seitenteil 17b zugeordnet ist, und zwar derart, dass die Relinge parallel oberhalb der Seitenteile 17a, 17b angeordnet sind und jeweils einerseits mit der Frontblende 15 und andererseits mit der Rückwand 16 verbunden sind. In Höhenrichtung 18 der Schublade 12 befinden sich zwischen den Oberkanten der Seitenteile 17a, 17b und den Unterkanten der Relinge Aussparungen 95, wodurch die Seiten der Schublade 12 nicht vollflächig mit Wandmaterial ausgestattet werden müssen, was zu einer Gewichtsreduktion der Schublade 12 führt.

An einander gegenüberliegenden Innenseiten der Seitenwände des Möbelkorpus, die das Auszugsfach links und rechts begrenzen, sind jeweils Führungseinheiten (nicht dargestellt) zur Führung der zugeordneten Schublade 12 befestigt. Die Führungseinheiten besitzen jeweils eine Korpusschiene (nicht dargestellt), denen eine Auszugsschiene (nicht dargestellt), die auch als Schubladenschiene bezeichnet werden könnte, zugeordnet ist. Die Auszugsschiene ist einerseits über eine Kupplungseinheit (nicht dargestellt) mit der Schublade verbunden und anderseits relativ zur Korpusschiene beweglich geführt. Es ist ferner möglich, zwischen der Korpusschiene und der Auszugsschiene eine Mittelschiene vorzusehen, die einerseits relativ beweglich zur Korpusschiene und anderseits relativ beweglich zur Auszugsschiene angeordnet ist. Eine solche Art von Führungseinrichtung wird auch als Vollauszug bezeichnet.

Im Folgenden soll nun die Befestigung der Relinge 90 an der Frontblende 15 beziehungsweise an der Innenseite 21 der Frontblende 15 mittels der erfindungsgemäßen Befestigungsvorrichtung 11 beschrieben werden, wobei die Befestigung der Relinge 90 an der Rückwand nicht näher beschrieben ist, jedoch auch auf dieselbe Art und Weise mit der nachfolgend beschriebenen Befestigungsvorrichtung 11 erfolgen kann.

Die Art der Befestigung der Relinge 90 an der Innenseite 21 der Frontblende 15 ist jeweils identisch, so dass im Folgenden nur die Befestigung einer der Relinge 90 beschrieben wird.

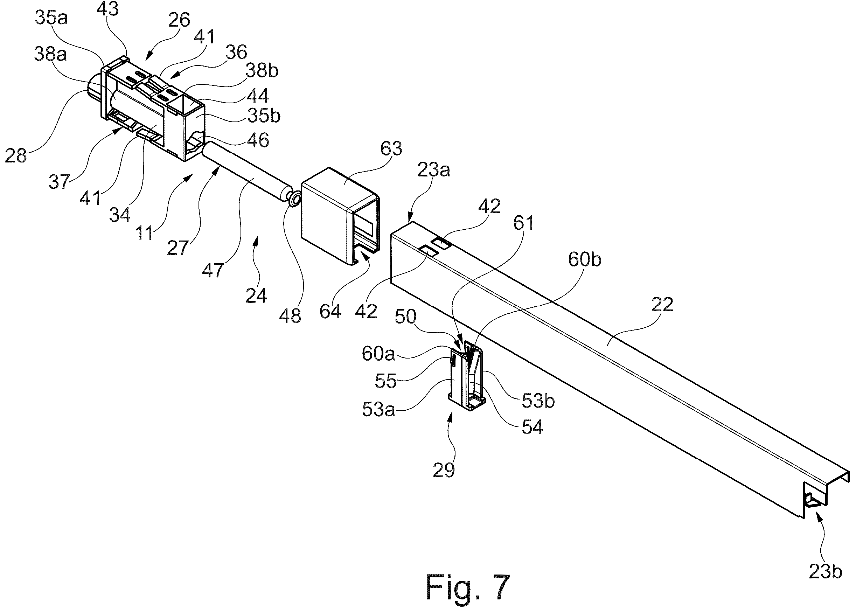

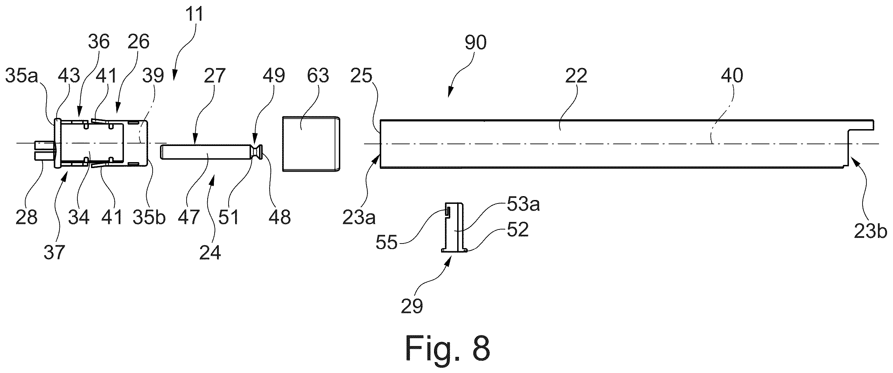

Wie insbesondere in Figur 7 und auch in Figur 8 gezeigt, ist ein wesentlicher Bestandteil der Reling 90 eine Basiskomponente 22 in Form einer Relingstrebe 22, die im gezeigten Beispielsfall als Hohlprofil ausgebildet ist und zweckmäßigerweise aus Blechmaterial besteht. Die Basiskomponente 22 besitzt ein erstes Komponenten-Ende 23a und ein entgegengesetzt liegendes zweites Komponenten-Ende 23b. Einem der Komponenten-Enden 23a, im gezeigten Beispielsfall dem ersten Komponente-Ende 23a ist eine Wandbefestigungseinrichtung 24 zur Befestigung an einem Wandelement der Schublade zugeordnet. Das Wandelement ist im gezeigten Beispielsfall die Frontblende 15, so dass die Wandbefestigungseinrichtung 24 in diesem Fall auch als Frontbefestigungseinrichtung bezeichnet werden könnte.

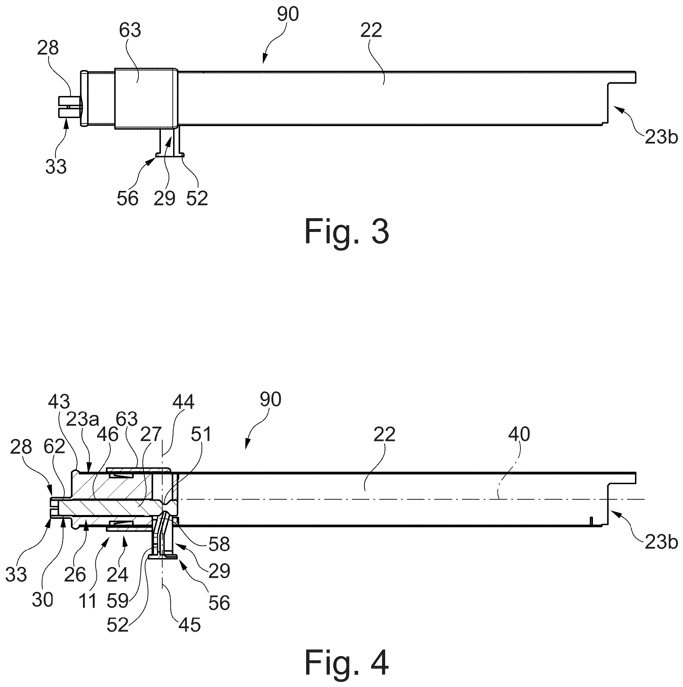

Wie beispielhaft die Zusammenschau der Figuren 4, 6 und 7 zeigt, ist das erste Komponenten-Ende 23a also offen und besitzt daher eine Einführöffnung 25 (Fig.8), in die ein wesentlicher Bestandteil der Wandbefestigungseinrichtung 24, nämlich ein Halter 26 einführbar ist.

Im gezeigten Beispielsfall ist der Querschnitt der Basiskomponente 22 rechteckig und der Halter 26 besitzt daher ebenfalls einen etwa rechteckartigen Querschnitt.

Zweckmäßigerweise ist der Halter 26 ein Kunststoffspritzgießteil mit mehreren Funktionsabschnitten, die nachfolgend noch näher beschrieben werden.

Dem Halter 26 ist ein relativ zum Halter 26 beweglich gelagertes Stellglied 27 zugeordnet, dem ein Verriegelungselement 28 zur lösbaren Verriegelung der Basiskomponente 22 an der Frontblende 15 und ein ebenfalls relativ zum Halter 26 beweglich gelagertes Betätigungselement 29 derart zugeordnet sind, dass durch Betätigung des Betätigungselements 29 eine Stellbewegung auf das Stellglied 27 einleitbar ist, dass dadurch, einen Stellhub durchführend, zwischen einer Ausgangsstellung 30 und einer Funktionsstellung 31 bewegbar ist, um das Verriegelungselement 28 zwischen einer Freigabestellung 33 und einer Verriegelungsstellung 32 zu verstellen.

Wie insbesondere in Figur 7 gezeigt, ist der Halter 26 ein in etwa quaderförmiger Körper und besitzt einen Halterkörper 34, wobei der Halterkörper 34 eine erste Stirnseite 35a aufweist, und eine der ersten Stirnseite entgegengesetzt angeordnete zweite Stirnseite 35b besitzt, wobei der zweiten Stirnseite nachfolgend noch beschriebener Weise das Verriegelungselement 28 zugeordnet ist. Der Halterkörper 34 besitzt ferner eine Oberseite 36 und einer eine dieser entgegengesetzt angeordneter Unterseite 37 sowie zwei parallel zueinander ausgerichteten Längsseiten 38a, 38b (Fig.7). Die Längsseiten 38a, 38b erstrecken sich entlang einer Halter-Längsachse 39. Die Halter-Längsachse 39 fluchtet mit einer Komponenten-Längsachse 40, die sich in Tiefenrichtung 20 der Schublade erstreckt. An der Ober- und Unterseite 36, 37 des Halterkörpers 34 befinden sich jeweils nach außen umgebogene Rastzungen 41, die beim Einstecken in die Einführöffnung 25 der Basiskomponente 22 durch die Wandung der Basiskomponente 22 zunächst aufeinander zugedrückt werden, bevor sie in zugeordnete Rastlöcher 42 an der Oberseite und der Unterseite der Basiskomponente 22 einrasten. Damit ist der Halter 26 gegen unbeabsichtigtes Herausziehen aus der zugeordneten Basiskomponente 22 entgegen der Einsteckrichtung gesichert.

Der Halter 26 besitzt ferner im Bereich der zweiten Stirnseite 35b eine gegenüber dem Rest des Halterkörpers 34 querschnittsgrößere stegartige Verbreiterung 43, die als Einsteckanschlag für den Halter 26 beim Einstecken in die Einführöffnung dient, das heißt die stegartige Verbreiterung 43 kommt mit der Stirnseite der Basiskomponente 22 in Kontakt, wodurch ein weiteres Einstecken beziehungsweise Einschieben in die hohlförmige Basiskomponente 22 vermieden wird. Dadurch ist der Halter 26 in Einsteckrichtung fixiert.

Der Halter 26 besitzt ferner Führungsmittel zur Führung des Betätigungselements 29. Die Führungsmittel weisen einen Führungskanal 44 auf, dessen Kanal-Längsachse 45 senkrecht zur Komponenten-Längsachse 40 ausgerichtet ist. Zweckmäßigerweise hat der Führungskanal 44 einen quadratischen Querschnitt, wodurch ein ebenfalls in etwa quadratischer Querschnitt ausgestattetes Betätigungselement 29 darin geführt werden kann.

Der Halterkörper 34 des Halters 26 wird ferner parallel zur Halter-Längsachse 39 von einem Stellglied-Führungskanal 46 durchsetzt, der einerseits an der ersten Stirnseite 35a und anderseits an der zweiten Stirnseite 35b des Halterkörpers 34 ausmündet.

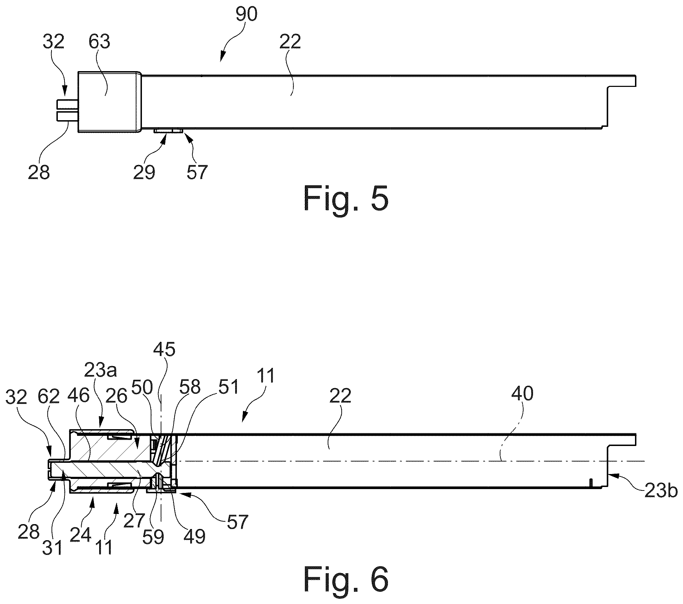

Wie insbesondere in den Figuren 7 und 8 gezeigt, gehört zu der Wandbefestigungseinrichtung 24 das Stellglied 27, das im gezeigten Beispielsfall als kreiszylindrischer Stellbolzen ausgebildet ist. Der Stellbolzen besitzt einen Bolzen-Basiskörper 47, der wie insbesondere die Figuren 4 und 6 zeigen, den Stellglied-Führungskanal 46 vollständig durchsetzt. Der Stellbolzen besitzt ferner einen Bolzenkopf 48, der den nachfolgend noch näher beschriebenen Verriegelungselement 28 abgewandt ist. Zwischen dem Bolzen-Basiskörper und dem Bolzenkopf ist eine Wirkfläche 49 ausgebildet, die mit einer nachfolgend noch näher beschriebenen Führungsbahn 50 des Betätigungselements 29 zusammenwirkt. Im gezeigten Beispielsfall ist die Wirkfläche als Schrägfläche ausgebildet, die Bestandteil einer zwischen dem Bolzenkopf 48 und dem Bolzen-Basiskörper 47 ausgebildeten Ringnut 51 ist.

Wie insbesondere in den Figuren 7 und 8 gezeigt, besitzt die Wandbefestigungseinrichtung 24 zu dem noch das Betätigungselement 29, das im vorstehend bereits beschriebenen Führungskanal 44 linear beweglich im Halterkörper 34 des Halters 26 geführt ist. Das Betätigungselement 29 ist etwa ebenfalls quaderförmig ausgebildet und könnte auch als eine Art Knopfkörper bezeichnet werden. Im gezeigten Beispielsfall besitzt das Betätigungselement 29 einen plättchenartigen Betätigungsabschnitt 29, der den im Gebrauchszustand unteren Abschluss des Betätigungselements 52 bildet. Die Querschnittsabmessungen des Betätigungsabschnitts 52 sind größer als der freie Querschnitt des Führungskanals 44 im Halterkörper 34 des Halters 26.

Vom plättchenartigen Betätigungsabschnitt 52 aus erstrecken sich senkrecht dazu ausgerichtet zwei Schenkelteile 53a, 53b, die parallel einander gegenüberliegend angeordnet sind und zwischen sich einen Bahnkörper 54 (Fig.7) aufnehmen, der einerseits mit dem einen Schenkelteil 53a und andererseits mit dem anderen Schenkelteil 53b verbunden ist und an dem die nachfolgend noch näher beschriebene Führungsbahn 50 ausgebildet ist. Die Schenkelteile 53a, 53b besitzen jeweils Außenseiten, die der Wandung des Führungskanals 44 zugeordnet sind, und mit denen das Betätigungselement im Führungskanal 44 linear beweglich geführt ist. An den Außenseiten der Schenkelteile 53a, 53b befinden sich jeweils von den Außenseiten nach außen abragende Sicherungsnasen 55, die als Ausziehsicherung gegen vollständiges Ausziehen des Betätigungselementes 29 aus dem Führungskanal 44 dienen. Hierzu können die Sicherungsnasen 55 mit entsprechenden Vorsprüngen (nicht dargestellt) im Führungskanal in Kontakt treten, wodurch das weitere Ausziehen des Betätigungselements 29 aus dem Führungskanal verhindert wird, wobei gleichzeitig eine erste Position 56, die im gezeigten Beispielsfalls die ausgezogene Position ist, definiert wird. Dementsprechend wird durch das Anschlagen des plättchenförmigen Betätigungsabschnitts 52 an die Unterseite des den Führungskanal 44 umgebenden Wandbereich des Halterkörpers 34 eine zweite Position 57, die in diesem Fall die eingefahrene Position ist, definiert.

Wie bereits erwähnt, befindet sich die Führungsbahn 50 im Bereich des Bahnkörpers 54 zwischen den beiden Schenkelteilen 53a, 53b. Wie insbesondere in den Figuren 4 und 6 gezeigt, besitzt die Führungsbahn 50 zwei aneinander angrenzende unterschiedliche Steigungen aufweisende lineare Bahnabschnitte 58, 59, von denen ein erster Bahnabschnitt 58 gegenüber der Kanal-Längsachse 45 geneigt und ein zweiter Bahnabschnitt 59 parallel zur Kanal-Längsachse 45 ausgerichtet ist.

Die Neigung des ersten Bahnabschnitts 58 in Richtung der Komponenten-Längsachse 40 ausgehend von dessen nicht an den zweiten Bahnabschnitt 59 angrenzenden freien Ende in Richtung des zweiten Bahnabschnitts 59 ist zum freien Ende der Basiskomponente 22, also zum ersten Komponenten-Ende 23a,hin ausgerichtet.

Der geneigte erste Bahnabschnitt 58 steht in der ersten Position 56 des Betätigungselements 29 in Eingriff mit der am Stellglied ausgebildeten Wirkfläche 49.

Wie insbesondere in Figur 7 gezeigt, wird der erste Bahnabschnitt 58 von zwei jeweils dem einen Schenkelteil 53a und dem anderem Schenkelteil 53b zugeordneten Teilabschnitten 60a, 60b gebildet, zwischen denen sich eine in etwa U-förmige, sich nach unten in Richtung des zweiten Bahnabschnitts 59 verjüngenden Aufnahmeschlitz 61 ausgebildet ist. Wie insbesondere in Figur 4 gezeigt, ist die Ringnut 51 des Stellbolzens im Bereich des Aufnahmeschlitzes 61 gelagert, wodurch auch eine axiale Fixierung des Stellbolzens bewirkt wird.

Das zuvor bereits beschriebene Verriegelungselement 28 ist im gezeigten Beispielsfall Bestandteil des Halters 26 und ist im gezeigten Beispielsfall als Spreizelement in Form eines Dübels ausgebildet. Bei der Verlagerung des Stellglieds 27, also des Stellbolzens, von der Ausgangsstellung 30 in die Funktionsstellung 31, wird der Dübel daher aufgespreizt, wodurch er sich in einem an der Innenseite der Frontblende 15 vorgesehenen Aufnahmeloch 70 festklemmen kann. Das Spreizelement in Form des Dübels besitzt hierzu eine Aufnahmeöffnung 62 für das Stellglied, die in Verlängerung des Stellglied-Führungskanals 46 angeordnet ist.

Im gezeigten Beispielsfall befindet sich der Stellbolzen, wie insbesondere in Figur 4 gezeigt, ein Stück weit bereits in die Aufnahmeöffnung 62 eingefahren.

Wie insbesondere in den Figuren 7 und 8 gezeigt, besitzt die Befestigungsvorrichtung 11 zudem noch ein Verkleidungselement 63, das hülsenartig ausgebildet ist und dazu vorgesehen ist, den Zwischenraum zwischen der Innenseite der Frontblende 15 und des ohnehin ästhetisch nicht zu beanstandenden Komponenten-Endes 23a zu verkleiden, wie es in den Figuren 5 und 6 gezeigt ist. Hierzu ist das Verkleidungselement 63 linear verschieblich entlang der Halter-Längsachse 39 auf dem Halter 26 gelagert, wobei an einer Unterseite des Verkleidungselements 63 eine quadratische Aussparung 64 für das Betätigungselement vorgesehen ist.

Wie die Zusammenschau der Figuren 4 und 6 zeigt, lässt sich das Verkleidungselement 63 im montierten Zustand der Reling in Richtung Innenseite der Frontblende 15 verschieben, wobei hier die stegartige Verbreiterung 43 als Verrastung für das Verkleidungselement 63 dienen kann.

Ein wesentlicher Aspekt der erfindungsgemäßen Befestigungsvorrichtung 11 ist, dass die Wandbefestigungseinrichtung 24 vollständig an der zugeordneten Basiskomponente 22 vormontierbar ist und so eine vormontierbare Baugruppe bildet, die ohne Weiteres dann in nachfolgend noch beschriebener Weise an der Frontblende 15 montierbar ist.

Zunächst wird die Vormontage dadurch ausgeführt, dass der Halter 26 in die Einführöffnung 25 am Komponenten-Ende 23a der Basiskomponente 22 eingesteckt wird, bis die Rastzungen einrasten und die stegförmige Verbreiterung 43 an die Stirnseite der Basiskomponente anschlägt. Das Stellglied in Form des Stellbolzens wurde zuvor bereits in den Stellglied-Führungskanal 46 eingeführt. Als nächstes wird das Betätigungselement 29 vormontiert, in dem es in den Führungskanal 44, in diesem Fall von unten, eingesteckt wird, wobei der Aufnahmeschlitz 61 zwischen den beiden Teilabschnitten 60a, 60b des ersten Bahnabschnitts 58 im Bereich der Ringnut 51 zu liegen kommt. Auch das Verkleidungselement wurde zuvor bereits auf den Halter 26 aufgesteckt.

Die Vormontagepositionen des Betätigungselements, des Stellglieds 27 und des Verriegelungselements 28 sind in Figur 4 gezeigt. Das Betätigungselement 29 steht vom Halter 26 nach unten vor, so dass der Betätigungsabschnitt 52 durch Drücken manuell oder maschinell betätigbar ist. Das Stellglied 27 befindet sich in seiner Ausgangsstellung 30 und ist noch nicht vollständig in den Kanal im Dübel eingefahren. Das Verriegelungselement 28 in Form des Dübels befindet sich in seiner Freigabestellung 33.

Mit der derartigen Vorkonfiguration wird nunmehr das Verriegelungselement 28 in Form des Dübels das vorkonfektionierte Aufnahmeloch 70 an der Innenseite der Frontblende 15 eingesteckt. Die Montage an der Rückwand erfolgt ebenfalls und ist her nicht näher beschrieben.

Die Befestigung der Reling an der Frontblende 15 erfolgt nun in ganz einfacher Weise durch Drücken des Betätigungselements 29, wodurch dieses im Führungskanal 44 linear verlagert wird. Dabei gleitet der erste, schräge Bahnabschnitt 58 an der Wirkfläche 49 des Stellbolzens entlang und durch die zuvor beschriebene Neigung wird erzielt, dass sich der Stellbolzen von der Ausgangsstellung linear nach vorne in seine Funktionsstellung 31 bewegt, mithin weiter in den Dübel einfährt, der dadurch aufgespreizt wird, wodurch eine Klemmung an der Wandung des Aufnahmelochs 70 an der Innenseite der Frontblende 15 erfolgt. Die Montage der Reling an der Frontblende 15 erfolgt dadurch komplett werkzeuglos und in einfachster Weise, beispielsweise gemäß gezeigtem Ausführungsbeispiel durch einen einzelnen manuell ausführbaren Drückvorgang. Nach der Festklemmung des Dübels kann dann noch das Verkleidungselement 63 in seine Funktionsstellung verschoben werden, so dass der Halter 26 überdeckt ist.

Auch das Lösen der Basiskomponente 22 in Form der Relingstrebe von der Frontblende 15 kann in einfachster Weise dadurch erfolgen, dass das Betätigungselement aus dem Führungskanal 44 herausgezogen wird, wodurch der Stellbolzen wiederum zurück in seine Ausgangsstellung verlagert, die Klemmung des Dübels aufgehoben wird, so dass dieser aus dem Aufnahmeloch an der Innenseite der Frontblende 15 herausgezogen werden kann.

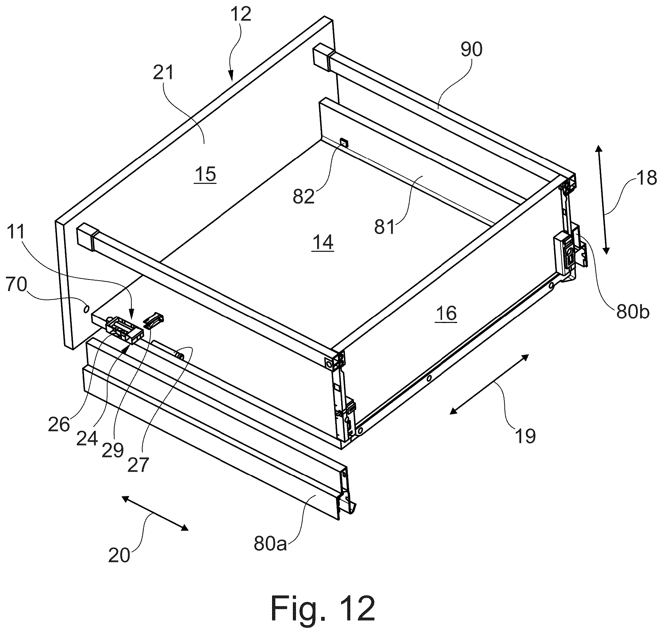

Die Figur 12 zeigt ein zweites Ausführungsbeispiel der erfindungsgemäßen Befestigungsvorrichtung 11 zur Befestigung von Seitenzargen 80a, 80b an der Frontblende 15 der Schublade.

Auch hier werden beide Seitenzargen 80a, 80b, als die linke und die rechte Seitenzarge 80a, 80b, in gleicher Weise mittels der Befestigungsvorrichtung 11 an der Innenseite der Frontblende 15 befestigt.

Der Halter 26 der Befestigungsvorrichtung 11 ist in die als Hohlprofil ausgebildete Seitenzarge 80a, 80b vollständig aufgenommen. An der Zargenwand 81 befindet sich eine fensterartige Ausnehmung 82, die von dem Betätigungselement 29 durchsetzt ist, wobei das Betätigungselement 29 in seiner aus dem Führungskanal herausragenden ersten Position 56 von der Zargenwand 81 nach innen in den Bereich des Bodenelements 14 hineinragt, wodurch eine Drückbetätigung vom Innenraum der Schublade her zu erfolgen hat.

Die nachfolgende Funktionsweise der Befestigungsvorrichtung 11 ist identisch wie im zuvor beschriebenen ersten Ausführungsbeispiel, mit dem Unterschied, dass nunmehr anstelle der Reling die Seitenzarge 80a, 80b an der Frontblende 15 befestigt ist.

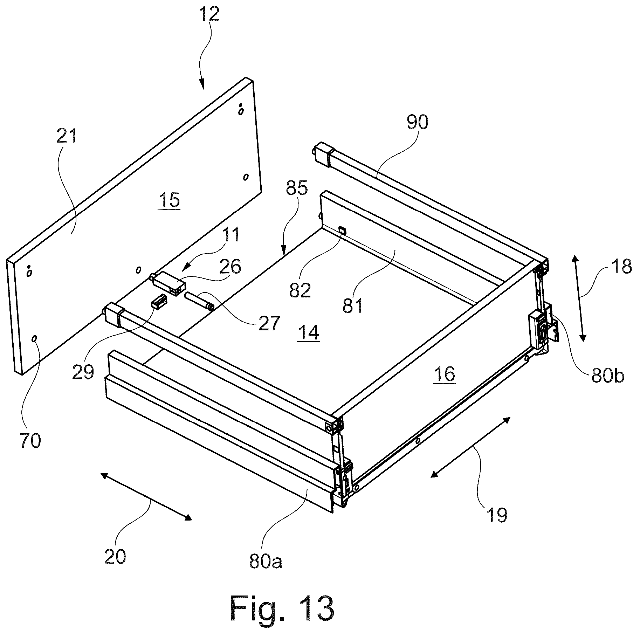

Die Figur 13 zeigt ein drittes Ausführungsbeispiel der erfindungsgemäßen Befestigungsvorrichtung 11 zur Befestigung eines Bodenelements 14 an der Frontblende 15 der Schublade.

Hierzu ist an der Stirnseite 85 des Bodenelements 14, das der Frontblende 15 zugeordnet ist, eine Ausnehmung (nicht dargestellt) ausgebildet, in die der Halter 26 aufgenommen ist. Die Ausnehmung kann beispielsweise mittels einer Einfräsung ausgebildet werden, wobei hier die Einfräsung so ausgebildet wird, dass das sich in der ersten ausgezogenen Position 56 befindlich Betätigungselement 29 mit hineinpasst und betätigbar ist. Alternativ wäre es auch denkbar den Halter 26 an der Unterseite des Bodenelements 14 zu befestigen, beispielsweise dort anzuschrauben.

Die nachfolgende Funktionsweise der Befestigungsvorrichtung 11 ist identisch wie im zuvor beschriebenen ersten Ausführungsbeispiel, mit dem Unterschied, dass nunmehr anstelle der Reling das Bodenelement 14 an der Frontblende befestigt ist.

## Patentansprüche

1. Befestigungsvorrichtung zur Befestigung von Komponenten eines vorzugsweise bewegbaren Möbelteils (12), insbesondere Schublade (12), aneinander, wobei das Möbelteil (12) wenigstens eine eine Komponenten-Längsachse (40) aufweisende Basiskomponente (22) aufweist, und die Befestigungsvorrichtung (11) eine einem Komponenten-Ende (23a) der Basiskomponente (22)zugeordnete Wandbefestigungseinrichtung (24) zur Befestigung an einem Wandelement des Möbelteils (12) aufweist, wobei die Wandbefestigungseinrichtung (24) einen am Komponenten-Ende (23a) der Basiskomponente (22) befestigbaren Halter (26) aufweist, an dem ein relativ zum Halter (26) beweglich gelagertes Stellglied (27) angeordnet ist, dem ein Verriegelungselement (28) zur lösbaren Verriegelung der Basiskomponente (22) am Wandelement und ein ebenfalls relativ zum Halter (26) beweglich gelagertes Betätigungselement (29) derart zugeordnet sind, dass durch Betätigung des Betätigungselementes (29) eine Stellbewegung auf das Stellglied (27) einleitbar ist, das dadurch, einen Stellhub durchführend, zwischen einer Ausgangsstellung (30) und einer Funktionsstellung (31) bewegbar ist, um das Verriegelungselement (28) zwischen einer Verriegelungsstellung (32) und einer Freigabestellung (33) zu verstellen, **dadurch gekennzeichnet, dass** das Betätigungselement (29) eine dort ausgebildete, mit dem Stellglied (27) in Eingriff stehende oder in Eingriff bringbare Führungsbahn (50) aufweist, die mit einer am Stellglied (27) ausgebildeten Wirkfläche (49) derart zusammenwirkt, dass Führungsbahn (50) und Wirkfläche (49) aneinander abgleiten und dadurch die Betätigungsbewegung des Betätigungselementes (29) in die Stellbewegung des Stellglieds (27) überführbar ist, die eine lineare, parallel zu Komponenten-Längsachse (40) ausgerichtete Stellbewegung ist.

2. Befestigungsvorrichtung nach Anspruch 1, **dadurch gekennzeichnet, dass** der Halter (26) Führungsmittel zur Führung des Betätigungselementes (29) aufweist, die derart ausgebildet sind, dass die Betätigungsbewegung des Betätigungselementes (29) eine Linearbewegung ist.

3. Befestigungsvorrichtung nach Anspruch 2, **dadurch gekennzeichnet, dass** die Führungsmittel einen eine Kanal-Längsachse (45) aufweisenden Führungskanal (44) zur Führung des Betätigungselements (29) aufweist, wobei vorzugsweise die Kanal-Längsachse (45) senkrecht zur Komponenten-Längsachse (40) ausgerichtet ist.

4. Befestigungsvorrichtung nach Anspruch 3, **dadurch gekennzeichnet, dass** der Führungskanal (44) einen rechteckigen, insbesondere quadratischen, Kanal-Querschnitt aufweist, wobei vorzugsweise das Betätigungselement (29) ebenfalls einen rechteckigen Querschnitt aufweist, insbesondere als eine Art Knopfkörper ausgebildet ist.

5. Befestigungsvorrichtung nach Anspruch 3 oder 4, **dadurch gekennzeichnet, dass** das Betätigungselement (29) zwischen einer aus dem Führungskanal (44) herausgefahrenen ersten Position (56) und einer in den Führungskanal (44) eingefahrenen zweiten Position (57) linear beweglich geführt ist, wobei vorzugsweise sich das Stellglied (27) in der ersten Position (56) des Betätigungselementes (29) in seiner Ausgangsstellung (30) befindet und bei der Überführung des Betätigungselements (29) in die zweite Position (57) mittels der Führungsbahn (50) in die Funktionsstellung (31) verlagert wird.

6. Befestigungsvorrichtung nach einem der vorhergehenden Ansprüche, **dadurch gekennzeichnet, dass** die Betätigungsbewegung des Betätigungselementes (29) durch manuell oder maschinell erzeugbares Drücken initiierbar ist.

7. Befestigungsvorrichtung nach einem der vorhergehenden Ansprüche, **dadurch gekennzeichnet, dass** die Führungsbahn (50) zwei aneinander angrenzende unterschiedliche Steigungen aufweisende lineare Bahnabschnitte (58, 59) aufweist, von denen eine erster Bahnabschnitt (58) gegenüber der Kanal-Längsachse (45) geneigt und ein zweiter Bahnabschnitt (59) parallel zur Kanal-Längsachse (45) ausgerichtet ist.

8. Befestigungsvorrichtung nach Anspruch 7, **dadurch gekennzeichnet, dass** die Neigung des ersten Bahnschnitts (58) in Richtung der Komponenten-Längsachse (40) ausgehend von dessen nicht an den zweiten Bahnabschnitt (59) angrenzenden freien Ende in Richtung des zweiten Bahnabschnitts (59) hin zum ersten ersten Ende (23a) der Basiskomponente (22) ausgerichtet ist,

9. Befestigungsvorrichtung nach Anspruch 8, **dadurch gekennzeichnet, dass** der geneigte erste Bahnabschnitt (58) in der ersten Position (56) des Betätigungselements (29) in Eingriff mit der am Stellglied (27) ausgebildeten Wirkfläche (49) steht.

10. Befestigungsvorrichtung nach einem der vorhergehenden Ansprüche, **dadurch gekennzeichnet, dass** das Stellglied (27) in einem parallel zur Komponenten-Längsachse (40) ausgerichteten Stellglied-Führungskanal (46) linear beweglich geführt ist.

11. Befestigungsvorrichtung nach einem der vorhergehenden Ansprüche, **dadurch gekennzeichnet, dass** das Stellglied (27) als vorzugsweise kreiszylindrischer Stellbolzen ausgebildet ist.

12. Befestigungsvorrichtung nach Anspruch 11, **dadurch gekennzeichnet, dass** der Stellbolzen eine als Wirkfläche (49) ausgebildete Schrägfläche besitzt, wobei vorzugsweise die Schrägfläche Bestandteil einer im Stellbolzen ausgebildeten Ringnut (51), insbesondere einer der Wandungen der Ringnut (51) ist.

13. Befestigungsvorrichtung nach einem der vorhergehenden Ansprüche, **dadurch gekennzeichnet, dass** das Verriegelungselement (28) als Spreizelement, insbesondere Dübel, ausgebildet ist, das durch die Stellbewegung des Stellglieds (27), insbesondere Stellbolzen, aufspreizbar ist und somit seine Verriegelungsstellung (32) einnehmen kann.

14. Befestigungsvorrichtung nach Anspruch 13, **dadurch gekennzeichnet, dass** das Spreizelement eine Aufnahmeöffnung (62) für das Stellglied (27), insbesondere Stellbolzen, aufweist, die in Verlängerung des Stellglied-Führungskanals (46) angeordnet ist.

15. Befestigungsvorrichtung nach Anspruch 14, **dadurch gekennzeichnet, dass** das Spreizelement ein Bestandteil des Halters (26) ist, insbesondere einstückig mit diesem verbunden ist.

16. Möbelteil, insbesondere Schublade, mit mehreren Komponenten, von denen wenigstens eine eine Basiskomponente und wenigstene eine ein Wandelement ist, **dadurch gekennzeichnet, dass** das Möbelteil eine Befestigungsvorrichtung nach einem der vorhergehenden Ansprüche aufweist.

17. Möbelteil nach Anspruch 16, **dadurch gekennzeichnet, dass** die Basiskomponente ausgewählt ist aus der Gruppe bestehend aus: Reling, Seitenwand, Zarge und Boden.

18. Möbelteil nach Anspruch 16 oder 17, **dadurch gekennzeichnet, dass** das Wandelement ausgewählt ist aus der Gruppe bestehend aus: Frontblende und Rückwand.

19. Möbel, mit einem Möbelkorpus, in dem wenigstens ein Möbelfach ausgebildet ist, in dem ein zugeordnetes Möbelteil insbesondere mittels einer Führungseinrichtung beweglich aufgenommen, **dadurch gekennzeichnet, dass** das Möbelteil nach einem der Ansprüche 16 bis 18 ausgebildet ist.
